# EUROPÄISCHE PATENTANMELDUNG

(11) **EP 4 822 464 A1**
(43) Veröffentlichungstag der Anmeldung: **14.10.2026**
(21) Anmeldenummer: 26151642.1
(22) Anmeldetag: 13.01.2026
(51) Int. Cl.: G05B 19/401, G05B 19/409, G06F 3/04815

(54) **VERFAHREN ZUM STEUERN EINER WERKZEUGMASCHINE**

(30) Priorität: 08.04.2025 DE 102025001186
(71) Anmelder: Dr. Johannes Heidenhain GmbH, 83301 Traunreut (DE)
(72) Erfinder: NAUMANN, Dennis, 30659 Hannover (DE); SCHUSTER, Sönke, 30826 Garbsen (DE)

(57) **Zusammenfassung**

Es wird ein Verfahren zum Steuern einer Werkzeugmaschine mittels einer Numerischen Steuerung zur Bearbeitung eines Werkstücks anhand eines NC-Programms offenbart. Die Numerische Steuerung umfasst einen Speicher mit einem Modell des Werkstücks und einen Bildschirm, auf dem das Werkstück dargestellt wird. Die Numerische Steuerung bzw. ein Bediener der Numerischen Steuerung führt programmgesteuert folgende Schritte aus:
a) Darstellen des Werkstücks auf dem Bildschirm,
b) Auswählen mittels Berührung des Bildschirms einer Fläche des Werkstücks durch den Bediener, wobei die Fläche einen Ursprung eines Koordinatensystems enthalten soll,
c) Berechnen und Darstellen mehrerer möglicher Koordinatensysteme auf der ausgewählten Fläche des Werkstücks, deren Ursprung an besonders ausgezeichneten Punkten der ausgewählten Fläche liegen,
d) Auswählen eines der möglichen Koordinatensysteme mittels Berührung des Bildschirms durch den Bediener, und
e) Festlegen des durch Berührung ausgewählten Koordinatensystems als das für ein Einmessen oder eine Bearbeitung des Werkstücks maßgebliche Koordinatensystem.

## Beschreibung

### GEBIET DER TECHNIK

Die vorliegende Erfindung betrifft ein Verfahren zum Steuern einer Werkzeugmaschine mittels einer Numerischen Steuerung. Die Numerische Steuerung unterstützt einen Anwender dabei, die Bearbeitung eines Werkstücks an der Werkzeugmaschine vorzubereiten, indem die Ausrichtung eines Koordinatensystems an einem Werkstückmodell auf einem berührungsempfindlichen Bildschirm erleichtert wird.

### STAND DER TECHNIK

Numerische Steuerungen sind heutzutage robuste Industrie-PCs, auf denen die Software zum Ansteuern von Werkzeugmaschinen oder Bearbeitungszentren mit mehreren Bearbeitungsachsen läuft. Auch in diesem Bereich setzen sich moderne Anwenderschnittstellen wie berührungsempfindliche Bildschirme (Touchscreens) durch, so dass die Bedienungskonzepte von Numerischen Steuerungen angepasst werden müssen, um davon möglichst gut zu profitieren.

Zum Betreiben einer Numerischen Steuerung an einer Werkzeugmaschine zur Bearbeitung eines Werkstücks liegt häufig ein 3D-Modell des Werkstücks vor. Zur Bearbeitung des Werkstücks müssen die Achsen dieses Modells und die Bearbeitungsachsen der Werkzeugmaschine zueinander in Beziehung gebracht werden, um das Werkstück ausrichten, einmessen und bearbeiten zu können.

Ein Verfahren zum Einmessen eines Werkstücks in einer Werkzeugmaschine ist beispielsweise in der DE102021210329A1 beschrieben.

Hierzu muss zunächst ein Koordinatensystem für das Werkstück festgelegt werden, in dem die Daten des Modells angegeben und später die Bewegungen der Bearbeitungsachsen berechnet werden. Dazu muss der Ursprung des Koordinatensystems und die Ausrichtung seiner Achsen festgelegt und in Einklang mit dem 3D-Modell gebracht werden. So wird häufig die Grund- oder Standfläche eines Werkstücks parallel zu einer durch zwei Achsen eines kartesischen Koordinatensystems aufgespannten Ebene ausgerichtet sein, und weitere Begrenzungsflächen des Werkstücks werden parallel zu anderen, durch Achsen des Koordinatensystems aufgespannten Ebenen sein. Bestimmte Kanten eines Werkstücks werden bevorzugt in der Richtung einzelner Koordinatenachsen ausgerichtet. Diese Ausrichtung von Flächen und Kanten eines Werkstücks mit Bezug auf ein Koordinatensystem minimiert den Rechenaufwand während einer Bearbeitung. Dies gilt vor allem dann, wenn auch die Bearbeitungsachsen der Werkzeugmaschine am Koordinatensystem ausgerichtet sind, also z.B. die Linearachsen parallel zur X, Y und Z-Richtung des Koordinatensystems liegen, und Rotationsachsen jeweils eine Rotation um eine dieser Richtungen bewirken. Für die Ausrichtung eines Koordinatensystems im Raum sind stets sechs Freiheitsgrade zu parametrieren.

Es ist bekannt, den Ursprung und die Ausrichtung so eines Koordinatensystems als Zahlenwerte in eine Numerische Steuerung oder in ein CAD-Programm einzugeben. Hierzu müssen die Zahlenwerte aber vorab bekannt sein oder erst ermittelt werden.

Es ist auch bekannt, den Ursprung eines Koordinatensystems mittels eines Mauszeigers auf einem Bildschirm durch Anklicken besonderer Punkte auszuwählen. Dabei sind auch Funktionen wie das Einrasten an nahe des Mauszeigers gelegenen besonderen Punkten wie Ecken des Werkstücks bekannt.

Moderne Numerische Steuerungen setzen allerdings immer häufiger berührungsempfindliche Bildschirme ein, die Eingaben mit einem Finger ermöglichen. Präzise positionierte Eingaben mit einem Finger sind auf so einem Bildschirm allerdings schwierig, da der Finger im Gegensatz zu einem Mauszeiger den ausgewählten Ort und die die dort angezeigten Inhalte verdeckt.

### ZUSAMMENFASSUNG DER ERFINDUNG

Es ist daher Aufgabe der Erfindung, das Festlegen eines Koordinatensystems an einem auf einem Bildschirm einer Numerischen Steuerung dargestellten Werkstück zu erleichtern.

Diese Aufgabe wird durch ein Verfahren gemäß Anspruch 1 gelöst. Vorteilhafte Details ergeben sich jeweils aus den abhängigen Ansprüchen.

Es wird ein Verfahren zum Steuern einer Werkzeugmaschine mittels einer Numerischen Steuerung zur Bearbeitung eines Werkstücks anhand eines NC-Programms offenbart. Die Numerische Steuerung umfasst einen Speicher mit einem Modell des Werkstücks und einen Bildschirm, auf dem das Werkstück dargestellt wird. Die Numerische Steuerung bzw. ein Bediener der Numerischen Steuerung führt programmgesteuert folgende Schritte aus:
a) Darstellen des Werkstücks auf dem Bildschirm,
b) Auswählen mittels Berührung des Bildschirms einer Fläche des Werkstücks durch den Bediener, wobei die Fläche einen Ursprung eines Koordinatensystems enthalten soll,
c) Berechnen und Darstellen mehrerer möglicher Koordinatensysteme auf der ausgewählten Fläche des Werkstücks, deren Ursprung an besonders ausgezeichneten Punkten der ausgewählten Fläche liegen,
d) Auswählen eines der möglichen Koordinatensysteme mittels Berührung des Bildschirms durch den Bediener, und
e) Festlegen des durch Berührung ausgewählten Koordinatensystems als das für ein Einmessen oder eine Bearbeitung des Werkstücks maßgebliche Koordinatensystem.

Hierzu analysiert die Numerische Steuerung das Werkstückmodell und schlägt mehrere besonders ausgezeichnete, in der ausgewählten Fläche liegende Punkte des Werkstücks als Ursprung eines Koordinatensystems sowie besonders ausgezeichnete Richtungen des Werkstücks als Richtung der Achsen des Koordinatensystems vor. Die Zahl der in Frage kommenden Punkte ist durch die Vorauswahl einer Fläche deutlich reduziert, was die weitere Auswahl bereits erheblich erleichtert.

Liegen in der aktuellen Ansicht des Werkstückmodells in einem Bereich zu viele Vorschläge dicht beieinander oder sogar hintereinander, ist es schwierig oder sogar unmöglich, in diesem Bereich einen einzelnen Vorschlag gezielt auszuwählen, zumal bei der Berührung des Bildschirms mit einem Finger. Daher werden die Vorschläge in diesem Bereich lediglich mit einem Symbol angedeutet, und nur der am besten zur aktuellen Blickrichtung passende Vorschlag (z.B. der am nächsten zum Betrachter liegende Vorschlag) wird als Koordinatensystem zur Auswahl angeboten, neben anderen, weiter weg liegenden Vorschlägen. Ein Bediener kann eine Neuausrichtung des Werkstückmodells auf dem Bildschirm bewirken, um einen anderen der Vorschläge aus dem Bereich als auswählbaren Vorschlag angeboten zu bekommen, z.B. wenn dieser nach der Neuausrichtung dem Betrachter am nächsten liegt.

Zuletzt kann ein Koordinatensystem endgültig ausgewählt werden, indem der Bildschirm nahe eines solchen Vorschlags berührt wird. Ein besonders genaues Treffen dieses Koordinatensystems ist dazu nicht notwendig. Die endgültige Auswahl kann dabei so erfolgen, dass dem Bediener in einem Zwischenschritt noch die Zahlenwerte der Lage und/oder der Ausrichtung des Koordinatensystems angezeigt werden, die dann noch korrigiert oder unmittelbar bestätigt werden können. Das ausgewählte Koordinatensystem wird dadurch zum für die weitere Betrachtung und Bearbeitung des Werkstücks maßgeblichen Koordinatensystem.

Durch die direkte Auswahl einer Fläche und eines Koordinatensystems in dieser Fläche auf dem Bildschirm wird die Bedienung der Werkzeugmaschine einfacher und intuitiver. Die automatisierte Berechnung und Darstellung möglicher Koordinatensysteme beschleunigt den Prozess der Koordinatensystemfestlegung und reduziert das Risiko von Fehlern.

Die Erfindung umfasst auch eine numerische Steuerung, die programmtechnisch eingerichtet ist, um das beschriebene Verfahren auszuführen. Diese Numerische Steuerung verfügt über einen Speicher mit einem Modell des Werkstücks und einen Bildschirm, auf dem das Werkstück darstellbar ist.

Die Auswahl einer Fläche im Schritt b) und dann eines Koordinatensystems im Schritt d) kann bequem mit einem Finger erfolgen, aber auch mit anderen Eingabemitteln wie beispielsweise einem Eingabestift. Auch ein herkömmlicher Mausklick soll im Sinne der Erfindung als Berührung des Bildschirms durch den Bediener gelten. Die Anforderungen an ein genaues Treffen eines bestimmten Punktes auf dem Bildschirm sind auch dann reduziert. Dies ist insbesondere auch dann nützlich, wenn der Mauszeiger mit einem Touchpad oder ähnlichen Eingabemitteln gesteuert wird. In Verbindung mit der Bedienung eines Touchscreens ist die vorliegende Erfindung also besonders nützlich, aber auch die Auswahl auf einem herkömmlichen Bildschirm mit anderen Eingabemitteln wird vereinfacht.

Es sei darauf hingewiesen, dass die Erfindung nicht nur zur Auswahl der Lage eines kartesischen Koordinatensystems mit drei aufeinander senkrecht stehenden Achsen dienen kann, sondern beispielsweise auch zur Auswahl eines Koordinatensystems mit einer Drehachse. Dies kann besonders dann nützlich sein, wenn ein Drehteil mehrere mögliche Drehachsen aufweist.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigt
- Figur 1: eine Werkzeugmaschine und eine Numerische Steuerung,
- Figur 2: ein Werkstückmodell aus dem Speicher der Numerischen Steuerung,
- Figur 3: das Werkstückmodell mit mehreren von der Numerischen Steuerung berechneten und dargestellten möglichen Koordinatensystemen,
- Figur 4: das Werkstückmodell mit einem vom Bediener ausgewählten, maßgeblichen Koordinatensystem,
- Figur 5: ein Verfahren, mit dem der Bediener beim Festlegen des maßgeblichen Koordinatensystems von der Numerischen Steuerung unterstützt wird.

### BESCHREIBUNG DER AUSFÜHRUNGSFORMEN

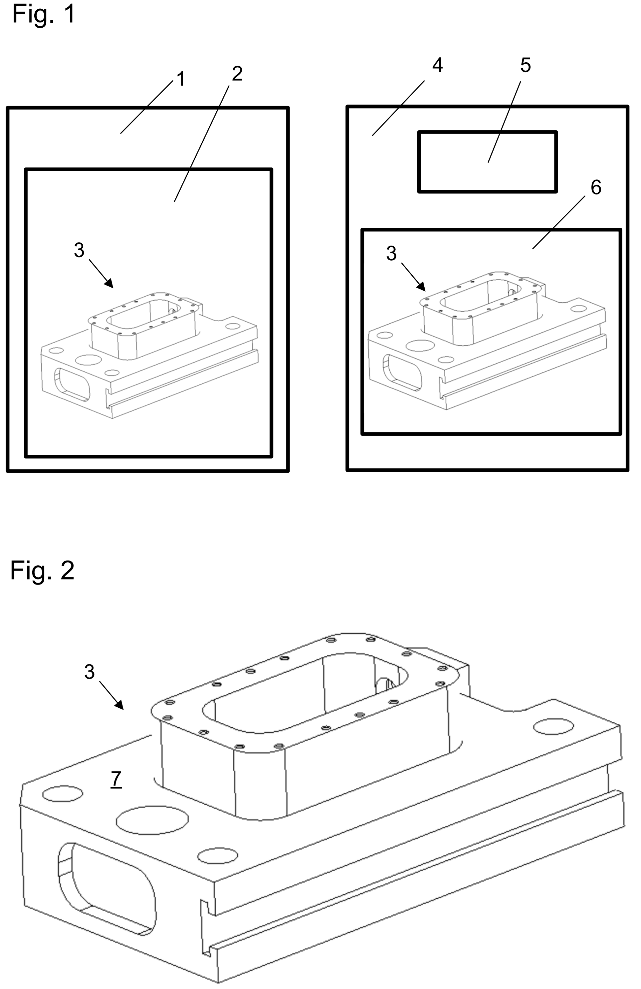

Die Figur 1 zeigt symbolisch eine Werkzeugmaschine 1 mit einem Arbeitsraum 2. Im Arbeitsraum 2 ist ein Werkstück 3 angeordnet, das durch die Werkzeugmaschine 1 bearbeitet werden soll. Dabei kann es sich beispielsweise um eine Fräsbearbeitung handeln. Die Werkzeugmaschine wird durch eine Numerische Steuerung 4 gesteuert. Die Numerische Steuerung 4 umfasst einen Speicher 5 und einen vorzugsweise berührungsempfindlichen Bildschirm 6, der oft auch als Touchscreen bezeichnet wird. Die Numerische Steuerung 4 kann daher durch Berührung des Bildschirms 6 mit einem Finger oder einem Eingabestift bedient werden. In einer Werkstattumgebung hat dies Vorteile gegenüber einer Mausbedienung, da die Notwendigkeit einer Ablagefläche für eine Maus entfällt. Auch gegenüber anderen Eingabegräten wie separaten, berührungsempfindlichen Eingabeflächen (Touchpads) oder sogenannten Trackballs ist die Eingabe direkt auf einem berührungsempfindlichen Bildschirm intuitiver.

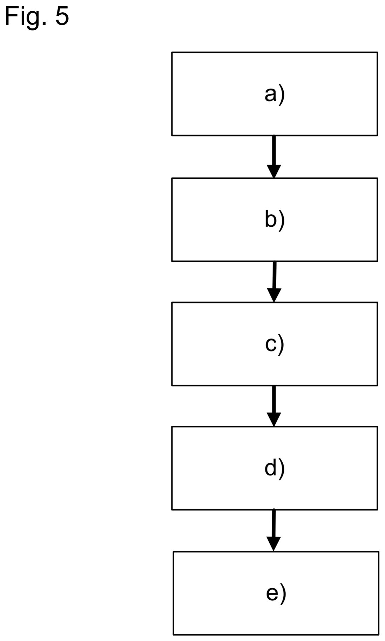

Im Speicher 5 der Numerischen Steuerung 4 ist ein Modell des Werkstücks 3 abgelegt, das die aktuelle Form des Werkstücks 3 wiedergibt. Die Numerische Steuerung 4 stellt das Modell des Werkstücks 3 auf dem Bildschirm 6 dar. Bevor die Bearbeitung des Werkstücks 3 beginnen kann, muss ein räumliches Bezugssystem oder Koordinatensystem mit dem Werkstück verknüpft werden. Es muss also beispielsweise festgelegt werden, wo der Ursprung eines kartesischen Koordinatensystems relativ zum Werkstück liegt, und wie die drei aufeinander senkrecht stehenden Achsen dieses Koordinatensystems ausgerichtet sind. Die vorliegende Erfindung soll den Bediener der Werkzeugmaschine 1 dabei bestmöglich unterstützen. Die Numerische Steuerung 4 ist programmtechnisch so eingerichtet, dass in einem mehrschrittigen Verfahren gemäß Figur 5 die Festlegung eines für die Bearbeitung des Werkstücks 3 maßgeblichen Koordinatensystems auf einfache Weise gelingt.

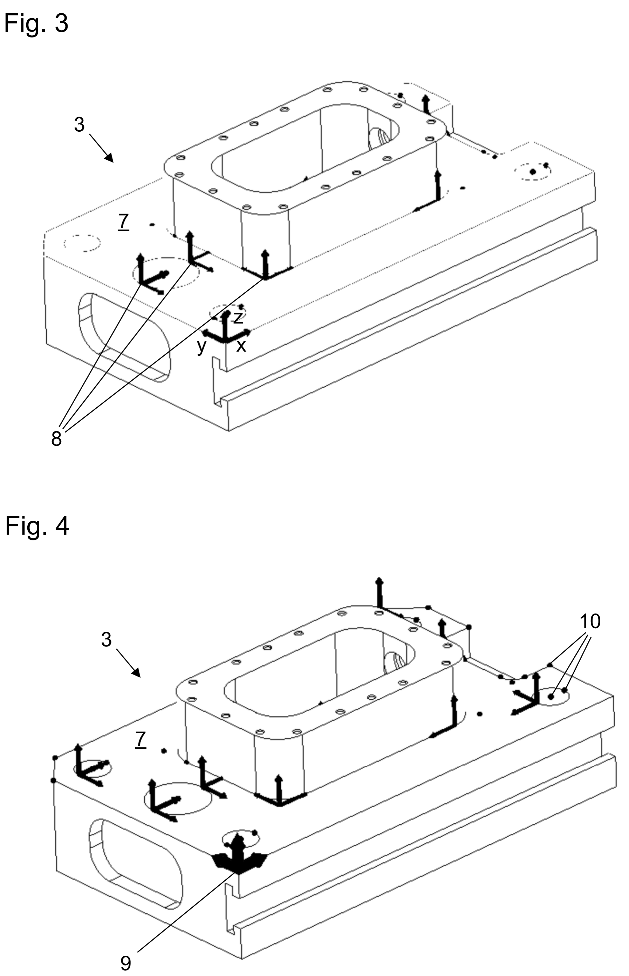

Die Figur 3 zeigt das Modell des Werkstücks 3 an, wie es auch einem Bediener auf dem Bildschirm in einem Schritt a) dargestellt wird. Man erkennt verschiedene Flächen und Strukturen wie Bohrungen, eine T-Nut, einen Flansch, Abrundungen und Phasen.

In einem Schritt b) wählt der Bediener mittels Berührung des Bildschirms 6 eine Fläche 7 aus, in deren Ebene der Ursprung des Koordinatensystems liegen soll. Bevorzugt wird diese Fläche 7 danach hervorgehoben dargestellt, etwa durch eine farbige Darstellung oder eine Schraffur.

In einem Schritt c), dessen Ergebnis in der Figur 3 dargestellt ist, berechnet die Numerische Steuerung mehrere mögliche Koordinatensysteme 8 und stellt diese zusammen mit dem Werkstück 3 dar. Die Koordinatensysteme 8 werden so ausgewählt, dass deren Ursprung in der Ebene der zuvor im Schritt a) ausgewählten Fläche 7 liegt, und dass die Koordinatenachsen sich beispielsweise an Begrenzungslinien der Fläche 7 oder anderen durch das Werkstück 3 nahegelegten Richtungen ausrichten.

Der genaue Ort des Ursprungs der Koordinatensysteme 8 bestimmt sich anhand besonders ausgezeichneter Punkte in oder an der ausgewählten Fläche 7. Beispiele dafür können sein:
- Enden der Begrenzungslinien der Fläche 7,
- Mittelpunkte von Bohrungen in der Fläche 7,
- Im Falle abgerundeter Ecken oder Fasen kann der Schnittpunkt von Begrenzungslinien der Fläche 7 vorgeschlagen werden, auch wenn dieser nicht unmittelbar in der ausgewählten Fläche 7 liegt,
- Anfangs-, End- oder Mittelpunkte von Kreisbögen oder Teilen davon,
- Beliebige andere, irgendwie durch die Gestalt des Werkstücks 3 ausgezeichnete Punkte.

Auf diese Weise kann eine Vielzahl von Vorschlägen für die Lage des Ursprungs eines Koordinatensystems entstehen, so dass es nicht sinnvoll ist, diese Koordinatensysteme im Schritt c) alle darzustellen. Ab einer gewissen Dichte solcher Vorschläge wird es sonst schwierig, gezielt einen der Vorschläge durch Berührung des Bildschirms 6 auszuwählen. Bevorzugt wird in diesem Fall nur der in der gewählten Blickrichtung dem Betrachter am nächsten liegende Vorschlag als auswählbares Koordinatensystem 8 dargestellt, die übrigen Vorschläge in der Nähe werden dann nur als kleine Symbole 10 dargestellt, um dem Bediener zu signalisieren, dass es weitere Optionen gibt. Der Bediener kann dann eine Neuausrichtung (Drehung, Verschiebung, Vergrößerung) des Werkstücks 3 auslösen (etwa mittels üblicher Gesten mit mehreren Fingern, z.B. "pinch to zoom"), damit ein zunächst nur als Symbol 10 dargestellter Vorschlag als auswählbares Koordinatensystem 8 dargestellt wird.

Im Schritt d) wählt der Bediener eines der möglichen Koordinatensysteme 8 aus, das damit zum maßgeblichen Koordinatensystem 9 wird, an dem sich die spätere Bearbeitung des Werkstücks 3 ausrichtet. In einer bevorzugten Ausführungsform wird dem Bediener nach dem Auswählen eines möglichen Koordinatensystems 8 noch ein Dialog angezeigt, in dem die Zahlenwerte der Lage und/oder der Ausrichtung des ausgewählten Koordinatensystems angezeigt werden. Die Zahlenwerte können dann nochmals verändert werden, die Auswahl kann abgebrochen werden, oder die Auswahl kann bestätigt werden und das ausgewählte Koordinatensystem so endgültig zum maßgeblichen Koordinatensystem bestimmt werden.

Statt der Auswahl eines Vorschlags für ein Koordinatensystem 8 kann auch jederzeit vor der endgültigen Auswahl eines maßgeblichen Koordinatensystems 9 eine andere Fläche 7 ausgewählt werden, um damit zum Schritt b) zurückzuspringen. Es werden dann im Schritt c) neue Vorschläge unterbreitet.

Mit dem dargestellten Verfahren wird der Bediener also auf bestmögliche Weise bei der Auswahl eines für die Bearbeitung des Werkstücks 3 geeigneten maßgeblichen Koordinatensystems 9 unterstützt. Auch mit weniger genauen Eingabemitteln wie einer Berührung des Bildschirms 6 mit einem Finger ist diese Auswahl deutlich erleichtert, indem zunächst nur eine Fläche 7 und dann eines von mehreren vorgeschlagenen Koordinatensystemen ausgewählt werden müssen. Selbst bei einer lokal zu großen Dichte der Vorschläge ist die Auswahl dennoch einfach, da zunächst nur einer von mehreren zu nahe beieinander liegenden Vorschlägen zur Auswahl angeboten wird. Andere Vorschläge können durch eine Änderung der Ansicht zum Vorschlag gemacht werden.

## Patentansprüche

1. Verfahren zum Steuern einer Werkzeugmaschine (1) mittels einer Numerischen Steuerung (4) zur Bearbeitung eines Werkstücks (3) anhand eines NC-Programms, wobei die Numerische Steuerung (4) einen Speicher (5) mit einem Modell des Werkstücks (3) und einen Bildschirm (6) umfasst, auf dem das Werkstück (3) dargestellt wird, wobei die Numerische Steuerung (4) programmgesteuert folgende Schritte ausführt oder einen Bediener der Numerischen Steuerung (4) ausführen lässt:
a) Darstellen des Werkstücks (3) auf dem Bildschirm (6),
b) Auswählen mittels Berührung des Bildschirms (6) einer Fläche (7) des Werkstücks (3) durch den Bediener, wobei die Fläche (7) einen Ursprung eines Koordinatensystems (8) enthalten soll,
c) Berechnen und Darstellen mehrerer möglicher Koordinatensysteme (8) auf der ausgewählten Fläche (7) des Werkstücks (3), deren Ursprung an besonders ausgezeichneten Punkten der ausgewählten Fläche (7) liegen,
d) Auswählen eines der möglichen Koordinatensysteme (8) mittels Berührung des Bildschirms (6) durch den Bediener, und
e) Festlegen des durch Berührung ausgewählten Koordinatensystems als das für ein Einmessen oder eine Bearbeitung des Werkstücks maßgebliche Koordinatensystem (9).

2. Verfahren nach Anspruch 1, wobei im Schritt c) die Koordinatensysteme (8) so gewählt werden, dass jeweils eine Achse (Z) der Koordinatensysteme (8) senkrecht auf der ausgewählten Fläche (7) steht und/oder weitere Achsen (X, Y) der Koordinatensysteme (8) parallel zu Begrenzungslinien der ausgewählten Fläche (7) ausgerichtet sind.

3. Verfahren nach Anspruch 1 oder 2, wobei im Schritt c) die besonders ausgezeichneten Punkte ausgewählt werden aus Enden von Begrenzungslinien der Fläche 7, Mittelpunkten von Bohrungen in der Fläche 7, Schnittpunkten von Begrenzungslinien der Fläche 7, auch wenn diese Schnittpunkte aufgrund von Abrundungen oder Phasen außerhalb der Fläche 7 liegen, Anfangs-, End- oder Mittelpunkten von Kreisbögen oder Teilen davon.

4. Verfahren nach einem der vorhergehenden Ansprüche, wobei von mehreren in der aktuellen Ansicht dicht beieinander liegenden, besonders ausgezeichneten Punkten lediglich einer als auswählbares Koordinatensystem (8) dargestellt wird, während die übrigen der dicht beieinander liegenden Punkte lediglich durch Symbole (10) angedeutet werden.

5. Verfahren nach Anspruch 4, wobei im Schritt c) vom Bediener eine Neuausrichtung des Werkstücks (3) ausgelöst wird, so dass ein zuvor als Symbol (10) dargestellter besonders ausgezeichneter Punkt als Koordinatensystem (8) dargestellt wird.

6. Verfahren nach einem der vorhergehenden Ansprüche, wobei im Schritt d) nach dem Auswählen eines der möglichen Koordinatensysteme (8) die Zahlenwerte der Lage und/oder der Ausrichtung des durch Berührung ausgewählten Koordinatensystems (8) angezeigt werden und vom Bediener verändert werden können, bevor diese im Schritt e) als maßgebliches Koordinatensystem (9) festgelegt werden.

7. Verfahren nach einem der vorhergehenden Ansprüche, wobei die im Schritt b) durch Berührung ausgewählte Fläche (7) des Werkstücks (3) hervorgehoben, insbesondere eingefärbt oder schraffiert dargestellt wird.

8. Numerische Steuerung zum Steuern einer Werkzeugmaschine (1) zur Bearbeitung eines Werkstücks (3) anhand eines NC-Programms, wobei die Numerische Steuerung (4) einen Speicher (5) mit einem Modell des Werkstücks (3) und einen Bildschirm (6) umfasst, auf dem das Werkstück darstellbar ist, wobei die Numerische Steuerung (4) programmtechnisch eingerichtet ist, um ein Verfahren nach einem der vorhergehenden Ansprüche auszuführen.

9. Numerische Steuerung nach Anspruch 8, wobei der Bildschirm (6) ein berührungsempfindlicher Bildschirm ist, der für Eingaben mittels eines Fingers eingerichtet ist.
